# EUROPÄISCHE PATENTANMELDUNG

(11) **EP 1 643 159 A2**
(43) Veröffentlichungstag der Anmeldung: **05.04.2006**
(21) Anmeldenummer: 05107484.7
(22) Anmeldetag: 15.08.2005
(51) Int. Cl.: F16H 1/32

(54) **Exzentergetriebe**

(30) Priorität: 30.09.2004 DE 102004048197
(71) Anmelder: ROBERT BOSCH GMBH, 70442 Stuttgart (DE)
(72) Erfinder: Moench, Jochen, 76547, Sinzheim (DE); Cettier, Daniel, 76137, Karlsruhe (DE)

(57) **Zusammenfassung**

Exzenter-Getriebe (10) zum Verstellen zweier relativ zueinander beweglich angeordneterer Teile im Kraftfahrzeug, mit einem von einem Drehantrieb (12) exzentrisch angetriebenen Exzenterrad (16), das durch abschnittsweises Ineinandergreifen mit einem Hohlrad (22, 20) zusammenwirkt, und einem Abtriebselement (34), das mittels Mitnahmeelementen (30, 36, 38) mit dem Exzenterrad (16) gekoppelt ist, wobei das Exzenterrad (16) eine im wesentlichen perizykloidische, unterschnittsfreie Außenverzahnung (18, 42) aufweist.

## Beschreibung

### Stand der Technik

Die Erfindung betrifft ein Exzentergetriebe zum Verstellen zweier relativ zueinander beweglich angeordneten Teile im Kraftfahrzeug nach der Gattung des unabhängigen Anspruchs.

Mit der DE 459 025 ist ein Über- oder Untersetzungsgetriebe zum Anbau an einen Elektromotor bekannt geworden, das als Exzentergetriebe ausgebildet ist. Auf einer antreibenden Welle sind zwei Exzenter um 180° versetzt angeordnet, die über Wälzlager zwei Exzenterscheiben in eine Exzenterbewegung versetzten. Die Exzenterscheiben haben als Außenverzahnung bspw. einen geschlossenen wellenförmigen Kurvenzug, der mit drehbar auf Bolzen gelagerten Rollen zusammenwirkt, die an einem ein Hohlrad bildendes Gehäuse angeordnet sind. Auf den Exzenterscheiben sind des weiteren Mitnehmerbolzen angeordnet, auf denen drehbar rechteckige Gleitschuhe gelagert sind. Diese greifen in zwei rechtwinklig zueinander angeordneten Mitnehmerführungen, um das Drehmoment auf eine Abtriebswelle zu übertragen.

Eine äußere Kurvenform, wie sie für die Außenverzahnung des Exzenterrads der DE 459 025 offenbart ist, hat den Nachteil, dass durch die relativ flachen Zähne recht hohe Normalkräfte auf die Kurvenform einwirken, die nicht zur Übertragung des Drehmoments dienen. Dadurch ist das Exzenterrad einer sehr hohen Belastung ausgesetzt, sodass dieses sowohl gegenüber dem Exzenter, als auch gegenüber dem Hohlrad mittels mechanisch aufwendigen, voluminösen Wälzlagern gelagert werden muss. Die dargestellte Kurvenform erlaubt auch nur die Verwendung einer relativ geringen Exzentrizität, wodurch der Kraftaufwand des antreibenden Exzenters relativ hoch ist.

### Vorteile der Erfindung

Das erfindungsgemäße Exzentergetriebe mit den kennzeichnenden Merkmalen des unabhängigen Anspruchs 1 hat den Vorteil, dass durch die Ausbildung einer zumindest näherungsweise perizykloidischen Außenverzahnung des Exzenterrads die tangentiale Komponente für die eigentliche Drehmomentübertragung deutlich größer ist, als bspw. bei einer Epizykloiden- oder Evolventen-Verzahnung. Durch die damit verbundene Verringerung der radialen Kraftkomponenten reduziert sich die Belastung des Exzenterrads, wodurch das gesamte Exzentergetriebe wesentlich kostengünstiger konstruiert werden kann. Die perizykloidische Außenverzahnung erlaubt eine größere Zahntiefe, wodurch die Exzentrizität des Getriebes größer gewählt werden kann. Durch die Ausbildung der perizykloidischen Kontur des Exzenterrads ohne Unterschnitt, entfällt ein ständiger Wechsel zwischen einer radialen Zug- und Druckbelastung des Exzenterrads durch die Wechselwirkung mit dem Hohlrad, wodurch die Lebenszeit und die Geräuschbildung des Getriebes positiv beeinflusst wird.

Durch die in den Unteransprüchen aufgeführten Maßnahmen ergeben sich vorteilhafte Weiterbildungen und Verbesserungen der im Anspruch 1 angegebenen Merkmale. Weist das Hohlrad als Innenverzahnung Zahnelemente auf, die im Sinne einer Zykloiden-Triebstock-Verzahnung zumindest halbzylinderförmig ausgebildet sind, bildet die Innenverzahnung mit der perizykloidischen Außenverzahnung immer einen konkav-konkav-Kontakt (im Gegensatz zur epizykloidischen Außenverzahnung), wodurch eine geringere Hertzsche Pressung und eine bessere Schmierfilmbildung beim Eingriff der beiden Verzahnungen entsteht. Dadurch erhöht sich der Wirkungsgrad des Getriebes, bzw. werden die Präzisionsansprüche bei der Fertigung des Getriebes verringert.

Durch die günstige perizykloidische Zahnform ohne Unterschnitt verringert sich in Kombination mit den zylinderförmigen Zahnelemente deren Beanspruchung derart, dass die Zahnelemente vorteilhaft als drehfeste Außenbolzen angeordnet werden können. Dadurch werden der Fertigungsaufwand und die Teilevielfalt des Getriebes deutlich reduziert.

Da die perizykloidische Außenverzahnung keinen Unterschnitt aufweist, und dadurch für den Eingriff der äußeren Zahnelemente lediglich halbzylinderförmige Elemente ausreichen, können diese sehr günstig einteilig mit dem das Exzenterrad umgebenden Getriebegehäuse ausgebildet sein. Dies erlaubt eine sehr kostengünstige Fertigung des Getriebegehäuses mit integrierter Innenverzahnung mittels Spritzgussverfahren - gegebenenfalls mit entsprechenden zylinderförmigen Einlegeteilen.

Wird die Außenverzahnung im Gegensatz zu einer herkömmlichen "verschlungenen Perizykloide" ohne Unterschnitt ausgebildet, erfährt das Exzenterrad immer nur Kraftkomponenten hin zu dessen Mittelpunkt oder in tangentialer Richtung, aber keine Kräfte vom Mittelpunkt weg. Dadurch wird eine Vibrationsbelastung des Exzenterrads vermieden, was dessen Lebensdauer deutlich erhöht, bzw. die Verwendung von leichteren Fertigungswerkstoffen erlaubt.

Besonders günstig ist es, die perizykloidische Außenverzahnung derart auszubilden, dass im Moment des Austritts bzw. Eintritts der äußeren Zahnelemente in oder aus der Außenverzahnung die Normalkraft auf die Zahnflanke einen Winkel zwischen 0 und 40° zur der Tangentialrichtung hin zum Mittelpunkt des Exzenterrads aufweist. Besonders vorteilhaft ist die Wahl dieses Winkels zwischen 0 und 20°, da hierbei die auf das Exzenterrad wirkende Kraft fast ausschließlich als Tangentialkomponenten zur Momentübertragung genutzt wird.

In einer weiteren Ausführung ist das Exzenterrad elastisch ausgebildet, sodass sich dessen Außenverzahnung beim Eingriff in die äußeren Zahnelemente in gewissen Grenzen an die Zahnelemente anpassen kann. Dadurch stehen immer mehrere Zahnelemente im Eingriff mit der Außenverzahnung, wodurch eine gute Lastverteilung und damit eine gute Belastbarkeit des Exzenterrads und der Verzahnung erzielt wird.

Durch die Herstellung des Exzenterrads mittels Spritzgießen, Stanzen oder Sintern können auch mathematisch kompliziertere Kurvenformen, wie die perizykloidische Außenverzahnung ohne Unterschnitt kostengünstig für die Massenproduktion angeformt werden, da auf ein spangebendes Verfahren verzichtet werden kann.

Durch die erfmdungsgemäße Ausformung der Außenverzahnung kann auf drehbare Lagerelemente zwischen dem Exzenterrad und dem äußeren Hohlrad verzichtet werden.

Dadurch entfällt die kostspielige Fertigung und Montage von Lagerhülsen oder Wälzlagern zwischen dem Exzenterrad und dem Hohlrad und zwischen dem Exzenterrad und dem Abtriebselement.

So kann das Abtriebselement bspw. mehrere Mitnahmebolzen aufweisen, die gleitend in runden Aussparungen der Exzenterräder geführt werden. Durch die reduzierten, auf die Exzenterräder wirkenden Radialkräfte kann ebenfalls der antreibende Exzenter direkt unmittelbar gleitend in einer runden Aufnahme des Exzenterrads ohne zusätzliche Lagerelemente gelagert werden. Hierdurch kann ein solches Zykloiden-Getriebe sehr kompakt und leicht gebaut werden, wodurch das erfindungsgemäße Getriebe für eine Anwendung zum Verstellen beweglicher Teile im Kraftfahrzeug geeignet ist.

### Zeichnungen

In den Zeichnungen sind verschiedene Ausführungsbeispiele einer erfindungsgemäßen Vorrichtung dargestellt und in der nachfolgenden Beschreibung näher erläutert. Es zeigen
- Figur 1: eine Explosionsdarstellung eines erfindungsgemäßen Exzentergetriebes,
- Figur 2: einen Schnitt durch ein weiteres Ausführungsbeispiel eines Exzentergetriebes,
- Figur 3: schematisch ein erfindungsgemäßes Exzenterrad, das mit korrespondierenden Außenbolzen kämmt und
- Figur 4: einen Ausschnitt einer erFmdungsgemäßen Verzahnung sowie einen Ausschnitt einer Verzahnung nach dem Stand der Technik.

### Beschreibung der Ausführungsbeispiele

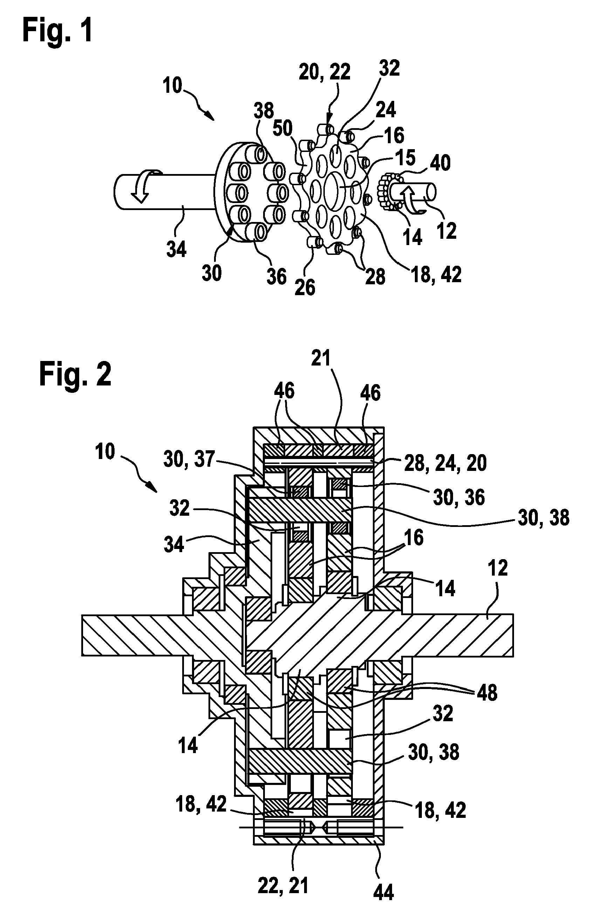

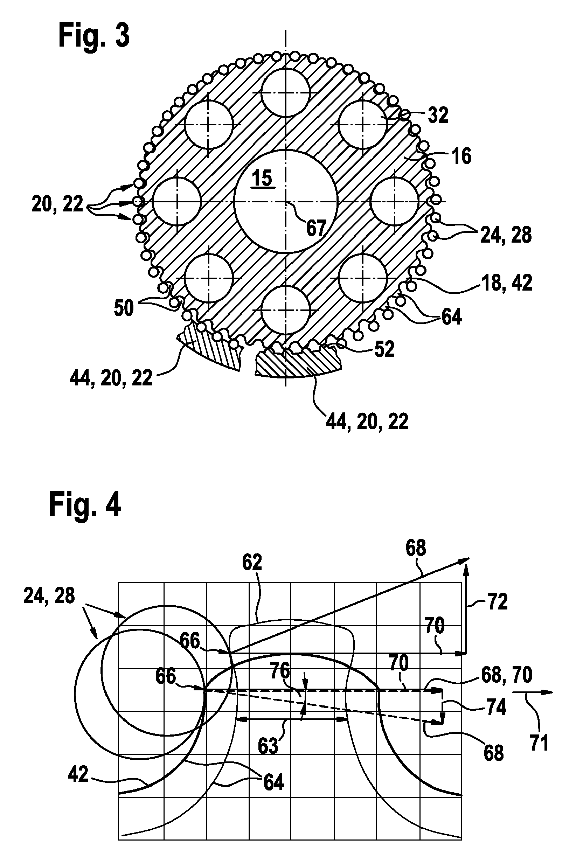

In Figur 1 ist als Exzentergetriebe 10 ein sogenanntes Zykloiden-Getriebe mit einer Triebstock-Verzahnung dargestellt, bei dem auf einer Antriebswelle 12 ein Exzenter 14 angeordnet ist. Auf dem Exzenter 14 ist drehbar ein Exzenterrad 16 gelagert, das ebenfalls als eine Kurvenscheibe 16 bezeichnet wird. Das Exzenterrad 16 weist eine Außenverzahnung 18 auf, die mit einem als Innenring 20 ausgebildeten Hohlrad 22 kämmt. Der Innenring 20 besteht aus mehreren ringförmig angeordneten Zahnelementen 24, die hier als drehbare Hülsen 26 ausgebildet sind, die auf Außenbolzen 28 drehbar gelagert sind. Durch die Differenz der Zähnezahl zwischen der Außenverzahnung 18 und dem Innenring 20 greift das Exzenterrad 16 immer nur abschnittsweise in den Innenring 20 ein, wodurch eine entsprechende Untersetzung realisiert ist. Das Drehmoment wird mittels Mitnahmeelementen 30, die in kreisrunde Aufnahmen 32 des Exzenterrads 16 greifen, auf ein Abriebselement 34 übertragen. Die Mitnahmeelemente 30 sind hier ebenfalls als drehbare Hülsen 36 ausgebildet, die auf drehfesten Mitnahmebolzen 38 des Abtriebselements 34 gelagert sind. Das Exzenterrad 16 weist eine runde Aussparung 15 auf, die mittels eines Wälzlagers 40 auf dem Exzenter 14 gelagert ist, sodass das Exzenterrad 16 mit den anderen Getriebebauteilen 14, 20, 34 über Rollreibung zusammenwirkt. Die Außenverzahnung 18 ist hierbei als perizykloidische Kurvenform 42 ohne Unterschnitt ausgebildet, wie diese in den Figuren 3 und 4 näher erläutert wird.

In Figur 2 ist ein weiteres Ausführungsbeispiel eines erfmdungsgemäßen Exzentergetriebes 10 im Schnitt dargestellt. Auf der Antriebswelle 12 mit den daran angeformten Exzentern 14 sind zwei Exzenterräder 16 gelagert, die um 180° gegeneinander verdreht angeordnet sind. Beide Exzenterräder 16 weisen eine perizykloidische Außenverzahnung 18 auf, die mit dem als Gehäuse 44 ausgebildeten Hohlrad 22 kämmen. Am Hohlrad 22 sind dabei mittels Fixierelementen 46 die Außenbolzen 28 drehfest gesichert und über einen Ring 21 am Gehäuse 44 abgestützt. Die als Außenbolzen 28 ausgebildeten Zahnelemente 24 greifen direkt gleitend in die Außenverzahnung 18 ein, ohne dass weitere drehbare Elemente 26 zwischen dem Exzenterrad 16 und dem Hohlrad 22 angeordnet sind. So befindet sich in der oberen Bildhälfte die Außenverzahnung 18 des rechten Exzenterrads 16 im maximalen Eingriff mit den Außenbolzen 28, während die Außenverzahnung 18 des linken Exzenterrads 16 genau an den Außenbolzen 28 vorbeidreht. Das Abtriebselement 34 weist drehfest angeordnete Mitnahmebolzen 38 auf, die in kreisrunden Aufnahmen 32 der beiden axial benachbarten Exzenterräder 16 - im Sinne eines Parallelzapfen-Getriebes - greifen. Aufgrund der mehreren, versetzt angeordneter Exzenterräder 16 wird das Drehmoment gleichmäßiger auf das Abtriebselement 34 übertragen, da die jeweiligen Außenverzahnungen 18 mit verschiedenen Abschnitten des Hohlrads 22 in Eingriff stehen. In der oberen Hälfte der Figur 2 sind die Mitnahmeelemente 30 mittels Drehhülsen 36 oder Wälzlagern 37 in den Aufnahmen 32 gelagert, sodass sich die Mitnahmebolzen 38 darin abrollen. In der unteren Hälfte der Figur 2 werden die Mitnahmebolzen 38 unmittelbar in den Aufnahmen 32 leitend geführt, da keine zusätzlichen Lagerelemente 36, 37 angeordnet sind. Im Ausführungsbeispiel sind die Außenbolzen 28 aus Stahl und die Exzenterscheiben 16 aus Messing hergestellt, wodurch die Reibung der "Drehelementfreien Verzahnung" verringert wird.

In weiteren Variationen des Ausführungsbeispiels werden die Exzenterräder 16 aus Kunststoff gespritzt, oder aus Metall gestanzt, bzw. gesintert. Bei der Verwendung von Kunststoff für das Exzenterrad 16 ist zwischen diesem und dem Exzenter 14 eine Lagerbuchse 48, bspw. aus Sintermaterial eingelegt. Die Außenbolzen 28 sind dabei entweder einstückig mit dem Gehäuse als Spritzgussteil, oder als metallene Einlegeteile im Spritzguss-Gehäuse ausgebildet. Durch die Ausbildung des Exzenterrads 16 als Kunststoffscheibe ist diese in gewissen Grenzen elastisch ausgebildet, so dass sich die Außenverzahnung 18 an die Form der äußeren Zahnelemente 24 anpasst und dadurch die Anzahl der in Eingriff stehenden Zahnelemente 24 erhöht.

In Figur 3 ist eine erfmdungsgemäße Verzahnung 18, 28 eines Getriebes gemäß Figur 2 im Querschnitt dargestellt. Der Innenring 20 ist nur schematisch dargestellt und weist bspw. einundfünfzig Zahnelemente 24 auf, die als Triebstock-Verzahnung mit zumindest halbzylinderförmigen Außenbolzen 28 ausgebildet sind. Das Exzenterrad 16 weist eine Außenverzahnung 18 auf, die als Perizykloiden-Kurve 42 ohne Unterschnitt ausgebildet ist, die im Ausführungsbeispiel fünfzig Zahnlücken 50 aufweist. Die perizykloidische Außenverzahnung 42 weist verglichen mit einer Evolventen-Verzahnung oder einer epizykloidischen Kurvenform relativ tiefe Zahnlücken 50 auf, wodurch eine hohe Übersetzung (hier bspw. i= -50) erzielt wird, ohne dass die Gefahr eines "Durchschlupfens" bei hohen zu übertragenden Drehmomenten besteht. Da zur Wechselwirkung mit einer perizykloidischen Außenverzahnung 42 ohne Unterschnitt als Zahnelemente 24 lediglich Halbzylinder benötigt werden, können die Außenbolzen 28 als einstückig mit dem Hohlrad 22 ausgeformte Halbzylinder 52, oder als drehfest im Hohlrad 22 gelagerte Außenbolzen 28 ausgebildet sein.

Die Figur 4 zeigt einen Ausschnitt eines erfmdungsgemäßen perizykloidischen Kurvenverlaufs 42 ohne Unterschnitt, im Eingriff mit einem Außenbolzen 28. Zum Vergleich ist gemäß dem Stand der Technik eine perizykloidische Außenverzahnung mit einem Unterschnitt 62 dargestellt, bei dem die Zahnform der Außenverzahnung eine Taille 63 aufweist. Die Verwendung des Begriffes perizykloidisch bezieht sich auf die Wahl technisch sinnvoller/realisierbarer Kurvenparameter und wird im Folgenden näher definiert. Eine perizykloidische Kurve 42 wird konstruiert, indem um einen kleineren festen Grundkreis ein den Grundkreis umfassender größerer Rollkreis abgerollt wird (Grundkreis befindet sich komplett innerhalb des Rollkreises). Dabei beschreibt ein fester Punkt auf dem Rollkreis eine verschlungene zykloidische Bahnkurve, bei der sich bei einem vollständigen Durchlauf des Rollkreises ein oder mehrere Punkte der Bahnkurve des Bahnpunktes überdecken. Von der perizykloidischen Kurve ist die geschweifte, epizykloidische Kurve zu unterscheiden, die durch das Abrollen eines Rollkreises auf dem Außenumfang eines Grundkreises entsteht (Rollkreis befmdet sich komplett außerhalb des Grundkreises).

In Figur 4 sind die beiden Außenbolzen 28 jeweils zum Zeitpunkt des Ein- oder Austritts in oder aus der Außenverzahnung 18 dargestellt, unmittelbar zu Beginn oder am Ende der Berührung zwischen dem Außenbolzen und einer Zahnflanke 64 der Außenverzahnung 18 (Austritts-/Eintrittspunkt 66). Bei der Peryzikloiden-Kurve mit Unterschnitt 62 wirkt zu diesem Zeitpunkt aufgrund des Unterschnitts eine Normalkraft 68 auf die Zahnflanke 64, die eine Tangentialkomponente 70 und eine, das Exzenterrad 16 von dessen Mittelpunkt 67 wegziehende Radialkomponente 72, aufweist. Dringt der Außenbolzen 28 beim Durchschreiten der Taille 63 tiefer in die Zahnlücke 50 der Außenverzahnung 62 ein, (nicht dargestellt), tritt anstelle der vom Mittelpunkt 67 wegweisenden Radialkomponente 72 eine zum Mittelpunkt hinweisende Radialkomponente auf, wodurch das Exzenterrad 16 einer ständigen Vibrationsbelastung ausgesetzt ist.

Bei der Perizykloiden-Kurve 42 ohne Unterschnitt weist die Normalkraft 68 am Austrittspunkt 66 immer nur Komponenten 70, 74 auf, die tangential zum Mittelpunkt 67 oder radial zum Mittelpunkt 67 hin ausgerichtet sind. Bei der in Figur 4 dargestellten Kurve 42 ohne Unterschnitt weist die Normalkraft 68 ausschließlich eine Tangentialkomponente 70 ohne radiale Komponenten 72 oder 74 auf. Dieser Fall definiert einen Austrittswinkel 76 von 0° zwischen der Tangentialrichtung 71 und der Normalkraft 68. Erfmdungsgemäß ist die Zahnflanke 64 der perizykloidischen Kurve 42 ohne Hinterschnitt derart ausgebildet, dass die Normalkraft 68 beim Eintritts- oder Austrittspunkt 66 der Zahnelemente 24 einen Austrittswinkel 76 im Bereich von 0 bis 40°, insbesondere von 0 bis 20° bildet. Ist der Austrittswinkel 76 näherungsweise 0°, tritt zum Zeitpunkt des Ein-oder Austritts 66 der Zahnelemente 24 nur eine minimale Gleitreibung auf (zwischen Zahnflanke 64 und Außenbolzen 28), sodass die gesamte, von dem Zahnelement 24 auf die Zahnflanke 64 einwirkende Normalkraft 68 zur Momentenübertragung genutzt wird.

Es sei angemerkt, dass hinsichtlich der in den Figuren und der Beschreibung gezeigten Ausführungsbeispiele vielfältige Kombinationsmöglichkeiten der einzelnen Merkmale untereinander möglich sind. So kann bspw. die konkrete Ausformung der perizykloidischen Außenverzahnung 42 ohne Unterschnitt (insbesondere der Bereich zwischen den Zahnflanken 64) und die konkrete Ausgestaltung der Zahnelemente 24 entsprechend der Getriebeanwendung variiert werden. Gemäß der Erfindung können jeweils zwischen dem Exzenterrad 16 und dem Exzenter 14, und/oder zwischen dem Exzenterrad 16 und dem Hohlrad 22, und/oder zwischen dem Exzenterrad 16 und dem Abtriebselement 34 drehbare Lagerelemente 26, 36, 37, 40 angeordnet werden, vorzugsweise kann jedoch aufgrund der erfindungemäßen Formgebung der Außenverzahnung 18 auf solche zusätzlichen Lagerelemente verzichtet werden. Dadurch können die Getriebebauteile auf eine Vielzahl sehr günstiger Herstellungsverfahren gefertigt werden, die sich für eine Massenproduktion des Getriebes 10 eignen. Durch geeignete Wahl der Materialpaarung zwischen den beweglichen Teilen, insbesondere einer Kunststoff-Metallkombination, kann die Gleitreibung zwischen diesen beweglichen Teilen weiter reduziert werden. Das Hohlrad 22 des Getriebes 10 kann bspw. auch in einem Hohlraum eines motorischen Antriebs angeordnet werden, wodurch ein sehr kompakter Verstellantrieb zum Verstellen beweglicher Teile im Kraftfahrzeug realisiert werden kann.

## Patentansprüche

1. Exzenter-Getriebe (10) zum Verstellen zweier relativ zueinander beweglich angeordneterer Teile im Kraftfahrzeug, mit einem von einem Drehantrieb (12) exzentrisch angetriebenen Exzenterrad (16), das durch abschnittsweises Ineinandergreifen mit einem Hohlrad (22, 20) zusammenwirkt, und einem Abtriebselement (34), das mittels Mitnahmeelementen (30, 36, 38) mit dem Exzenterrad (16) gekoppelt ist, **dadurch gekennzeichnet, dass** das Exzenterrad (16) eine im wesentlichen perizykloidische, unterschnittsfreie Außenverzahnung (18, 42) aufweist.

2. Exzenter-Getriebe (10) nach Anspruch 1, **dadurch gekennzeichnet, dass** das Hohlrad (22, 20) im wesentlichen zumindest halbzylinderförmige Zahnelemente (24, 28, 52) aufweist, die in die Außenverzahnung (18, 42) des Exzenterrads (16) eingreifen.

3. Exzenter-Getriebe (10) nach einem der Ansprüche 1 oder 2, **dadurch gekennzeichnet, dass** die Zahnelemente (24, 28, 52) als drehfest am Hohlrad (22, 20) angeordnete Außenbolzen (28) ausgebildet sind.

4. Exzenter-Getriebe (10) nach einem der vorhergehenden Ansprüche, **dadurch gekennzeichnet, dass** das Hohlrad (22, 20) als drehfest angeordnetes Getriebegehäuse (44) mit darin integral angeformten zumindest halbzylinderförmigen Zahnelementen (24, 28, 52) ausgebildet ist.

5. Exzenter-Getriebe (10) nach einem der vorhergehenden Ansprüche, **dadurch gekennzeichnet, dass** die Außenverzahnung (18, 42) des Exzenterrads (16) Zahnflanken (64) aufweist, auf die die eingreifenden Zahnelemente (24, 28, 52) des Hohlrads (22, 20) eine Normalkraft (68) ausüben, die ausschließlich Komponenten (74) zum Mittelpunkt (67) des Exzenterrads (16) hin und/oder Tangentialkomponenten (70) aufweist, und insbesondere keine Komponenten (72) radial vom Mittelpunkt (67) weg aufweist.

6. Exzenter-Getriebe (10) nach einem der vorhergehenden Ansprüche, **dadurch gekennzeichnet, dass** beim Austritt und/oder Eintritt (66) der Zahnelemente (24, 28, 52) aus der Außenverzahnung (18, 42) die Normalkraft (68) einen Austrittswinkel (76) zwischen 0° und 40° - insbesondere zwischen 0° und 20° - bezüglich der Tangentialrichtung (71), hin zum Mittelpunkt (67) des Exzenterrads (16) aufweist.

7. Exzenter-Getriebe (10) nach einem der vorhergehenden Ansprüche, **dadurch gekennzeichnet, dass** das Exzenterrad (16) zumindest im Bereich der Außenverzahnung (18, 42) elastisch verformbar ist, und insbesondere aus Kunststoff hergestellt ist.

8. Exzenter-Getriebe (10) nach einem der vorhergehenden Ansprüche, **dadurch gekennzeichnet, dass** das Exzenterrad (16) mittels Spritzgießen, Stanzen oder Sintern hergestellt ist.

9. Exzenter-Getriebe (10) nach einem der vorhergehenden Ansprüche, **dadurch gekennzeichnet, dass** zwischen dem Exzenterrad (16) und dem Hohlrad (22, 20), und/oder zwischen dem Exzenterrad (16) und dem Abtriebselement (34) keine drehbaren Elemente, wie beispielsweise Wälzlager (40) oder Lagerhülsen (26, 36) angeordnet sind.

10. Exzenter-Getriebe (10) nach einem der vorhergehenden Ansprüche, **dadurch gekennzeichnet, dass** das Exzenterrad (16) eine runde Aussparung (15) für die drehbare Aufnahme eines Exzenterelements (14) und mehrere runde Aufnahmen (32) für die als Mitnahmebolzen (38) ausgebildeten Mitnahmeelemente (30) des Abtriebselements (34) aufweist.
